(19) Europäisches Patentamt / European Patent Office / Office européen des brevets

(11) **EP 2 383 689 A1**

(12) **EUROPEAN PATENT APPLICATION**

(43) Date of publication:
**02.11.2011 Bulletin 2011/44**

(51) Int Cl.:
***G06Q 10/00*** *(2006.01)*

(21) Application number: **11425119.2**

(22) Date of filing: **29.04.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.04.2010 IT RM20100201**

(71) Applicant: **Selex Sistemi Integrati S.p.A.
Roma (IT)**

(72) Inventor: **Roncolato, Laura
00131 Roma (IT)**

(74) Representative: **Santi, Filippo et al
Barzano' & Zanardo Roma S.p.A.
Via Piemonte 26
00187 Roma (IT)**

(54) **System and method to estimate the effects of risks on the time progression of projects**

(57) The invention concerns an apparatus (computer and connection with risk and planning data) and a method which, upon finding well in advance the possible delays of the time references of end task or key milestone of a project (or interdependent projects) in life cycle, due to potential risks, are able to calculate and output a set of values (coefficients matrix). These coefficients represent a two-way link between each risk and each milestone and their values provide the estimation of the contribution of a specific risk to a specific task/milestone. In such a way, for each risk, it is possible to highlight the contribution of such a risk to the possible shift of the whole set of tasks/milestones of the project; at the same time, for each task/milestone of the project, the coefficients highlight the contribution of the whole set of risks to the time shift of such a milestone/task. In such a way these coefficients values (visualized in output with σ of task/milestone) permit to address more effectively reduction actions of the possible project/tasks delays. The same results are provided considering a multi-interdependent-projects scenario.

EP 2 383 689 A1

**Description**

**BACKGROUND OF THE INVENTION**

**Field of the Invention**

Aspects of the present invention concern a system and method for estimating the temporal risks effects and/or their contribution to the time progression of projects.

More in detail, aspects of the present invention concern an apparatus and a method that, highlighting with large advance the possible shifts of the end time references of key tasks/milestones of a project during its lifecycle, are able to obtain a set of values (coefficients organized in a matrix where rows and columns are associated to risks and tasks/milestones) each of which provides the estimation of the effect/contribution of a specific risk to a specific task/milestone. The present invention significantly improves existing methods and techniques relevant to project planning, monitoring and control disciplines, including project schedule baseline definition and budget costs allocation. Unlike similar methods, in fact, this invention provides a set of coefficients that represent a two-way link between each specific risk and each specific task/milestone: for each risk, the invention highlights the contribution of such a risk to the possible shift of the whole set of tasks/milestones of the project; at the same time, for each task/milestone of the project, the invention highlights the contribution of the whole set of risks to the time shift of such a milestone/task. The same results are provided considering a multi-interdependent-projects scenario where the invention is also able to highlight a two-way link between the risk identified for a specific project and the whole set of milestones relevant to the other interdependent projects, and vice versa.

**Background of the Related Art**

WO2006/138141 discloses a method and system for managing a project with multiple tasks and milestones by defining probabilities of key project events and assessing their performance risk. Each task of the project is described as a waveform propagating from this task to an assigned milestone, and each milestone is described by a coherent superposition of task waveforms. The probability of each milestone is obtained by a comparison of probabilities of non-perturbed and perturbed milestones, which are caused by the delay of a task or combination of tasks. Such a propagation is performed in analogy with quantum mechanics to better solve the problem of managing very complex projects without alleged disadvantages of Monte Carlo simulations. Therefore, the system/method disclosed by WO2006138141 permits to evaluate a sensitivity of milestones to tasks perturbations (delays). In this manner, an evaluation may be made as to which tasks have to be prioritized in order to maximize the probability that the milestone will occur. This method is not able to indicate risks contribution on tasks/milestones because it provides a priority scale referring only to tasks (in which a waveform is defined). Conversely, in a common project situation, each task can be associated with more risks impacting directly on it, where each risk has an assigned related probability distribution. Usually, in a project, there are several tasks having more risks impacting directly on each of them. In this scenario the task priority may be much different from the risks priority so that task priority evaluation is not useful to support the management of project risks based on intervening on the drivers or causes of the project risks according to a priority scale of the causes.

US2007/0124186 A1 discloses a method of managing project uncertainties using event chains. The method includes the steps of: (a) identification of events which may occur during a course of an activity, determining their probability and impact, (b) identification of event chains; and (c) performing quantitative analysis to determine the effect of events and event chains on a project schedule. Quantitative analysis is performed by using Monte Carlo simulations. Events and event chains may be identified using project historical data and based on analysis of actual project performance. Event chain diagrams may be used to visualize events and event chains. Identification of critical events or event chains may be performed using sensitivity analysis. Therefore, US 2007124186 A1 shows a quantitative analysis to determine the effect of events and event chains on a project schedule. The determination of the effect does not provide any information on how such effect is linked to the risks impacting on the planning. In other words, the contribution of the risk on these effects is obscure so that any support to risk management in terms of risk priority information is not available. Finally identification of critical events is performed using sensitivity analysis. The critical chain evaluation is not able to provide, compared to tasks effect evaluation, the risk priority on the project.

It is to be noted that classical sensitivity analysis cannot provide risk priority information, which would allow the user to identify the critical events in terms of their impact at a glance.

US2004/0138897 discloses a method and system to select projects from available projects and to allocate resources to departments to maximize the incremental value gained within a desired execution risk. Probability distribution is created by performing a Monte Carlo simulation considering probabilities of future events that may increase or decrease capacity. Thus, US 2004138897 A1 is a methodology to create the aggregate probabilistic effect (execution risk) from many probabilistic drivers (for example resources allocation). If the execution risk is not within a desired level, the drivers are changed (through a Monte Carlo simulation of the trial Portfolio) in order to obtain an execution risk within the desired level. The disclosed method is aimed only at evaluating the effect of the drivers without specifying their contribution to the project. When this contribution is unknown the drivers have to be changed in an iterative process until the best value of execution risk is obtained (as is detailed in the document).

Moreover, as yet, in the art, the analysis of the time progression of a project has been carried out with respect to the activities that are subjected to a single risk. Further the difficulty of identifying critical effects and correlating these to one or more risks in a quantitative way has not be overcome. Further, there is no solution of providing a project management designed so as it can be easily and effectively used with light hardware architectures and mobile equipment. Assessing the historical contribution of each risk on each activity is a problem that has not yet been undertaken.

It is therefore object of the present invention to provide a method and system for evaluating the time progression of projects (where each activity can be subjected to several risks), including the information of risk effect/contribution to this time progression, that solves the problems and overcomes the drawbacks of the prior art.

According to an aspect, it is an object of the present invention to provide a computer-implemented method, computer program product, method and system enabling updating, processing and managing project data more efficiently with regard to time and less requirement of computation time.

## SUMMARY OF THE INVENTION

It is subject matter of the present invention a method for estimating of the time shifting of the activities of one or more interlinked projects, according to attached claims 1 to 4.

It is further specific subject matter of the present invention a computer program according to attached claim 5.

It is further specific subject matter of the present invention a memory support according to attached claim 6.

It is further specific subject matter of the present invention a system according to attached claims 7-15.

It is further specific subject matter of the present invention a computer assisted method for estimating time shifting of tasks within one or more interlinked projects due to an effect of risks associated with the tasks, and for estimating the impact of each risk on the projects, the computer comprising a data repository and a display device, each project comprising at least one task, a project start task and a project end task, each task having an associated task start, a task end and a task duration, wherein a subset of the at least one task is defined, which comprises one or more tasks each being associated to at least one risk having an occurrence probability and a time delay induced on each task of the subset of the at least one task by the risk, and wherein each at least one task, the project end task, the project start task, the task start, the task end and each risk are stored in the data repository, the method comprising:

for each risk, calculating an associated delay for each task of the subset as a function of its occurrence probability and a risk delay distribution;

for each task of the subset, calculating an associated time shifting comprising time shifting of reference time instants of the associated task start and task end;

for each at least one task, calculating reference time instants of the associated task start and the task end;

for each at least one task, updating a planning reference baseline with the time shifting, the planning reference baseline comprising the task duration, a priority relation and time position of each task with respect to reference time instants of the project start task and the project end task;

calculating a project critical path for achieving the associated task end;

extracting a probability distribution and a cumulated probability distribution of time shifting of a time instant of the project end task and of time shifting of each task with respect to the reference baseline;

calculating a value of an index of sensitivity of time shifting for each task of the subset caused by each risk associated with the task;

calculating a value of an index of sensitivity of planning to shift each at least one task;

calculating a value of an index of sensitivity of planning to the delay induced by each risk;

storing the values of the indices of sensitivity of time shifting, sensitivity of planning, and sensitivity of planning to the delay caused by each risk in the data repository;

displaying at least the index of the sensitivity of planning to the delay caused by each risk on the display device; and

implementing a shifting of tasks of the project based on at least the index of the sensitivity of planning to the delay caused by each risk.

It is further specific subject matter of the present invention a system for estimating time shifting of tasks within one or more interlinked projects due to an effect of risks associated with the tasks, and for estimating the impact of each risk on the projects, each project comprising at least one task, a project start task and a project end task, each task having an associated task start, a task end and a task duration, wherein a subset of the at least one task is defined, which comprises one or more tasks each being associated to at least one risk having an occurrence probability and a time delay induced on each task of the subset of the at least one task by the risk, and wherein each at least one task, the project end task, the project start task, the task start, the task end and each risk are stored in a data repository, the system comprising:

a module for calculating, for each risk, an associated delay for each one or more tasks of the subset as a function of its occurrence probability and a risk delay distribution;

a module for calculating, for each task of the subset, an associated time shifting comprising time shifting of reference time instants of the associated task start and task end;

a module for calculating, for each at least one task, reference time instants of the associated task start and the task end;

a module for updating, for each at least one task, a planning reference baseline with the time shifting, the planning reference baseline comprising the task duration, a priority relation and time position of each task with respect to reference time instants of the project start task and the project end task;

a module for calculating a project critical path for achieving the associated task end;

a module for extracting a probability distribution and a cumulated probability distribution of time shifting of a time instant of the project end task and of time shifting of each task with respect to the reference baseline;

a module for calculating a value of an index of sensitivity of time shifting for each task of the subset caused by each risk associated with the task;

a module for calculating a value of an index of sensitivity of planning to shift each at least one task;

a module for calculating a value of an index of sensitivity of planning to the delay induced by each risk;

a module for storing the values of the indices of sensitivity of time shifting, sensitivity of planning, and sensitivity of planning to the delay caused by each risk in the data repository;

a module for displaying at least the index of the sensitivity of planning to the delay caused by each risk on a display device; and

a module for implementing a shifting of tasks of the project based on at least the index of the sensitivity of planning to the delay caused by each risk.

It is further specific subject matter of the present invention a system for estimating time shifting of tasks within one or more interlinked projects due to an effect of risks associated with the tasks, and for estimating the impact of each risk on the projects, each project comprising at least one task, a project start task and a project end task, each task having an associated task start, a task end and a task duration, wherein a subset of the at least one task is defined, which comprises one or more tasks each being associated to at least one risk having an occurrence probability and a time delay induced on each task of the subset of the at least one task by the risk, the system comprising:

a processor;

a data repository accessible by the processor, the data repository storing each at least one task, the project end task, the project start task, the task start, the task end and each risk; and

a user interface functioning via the processor;

wherein, for each risk, an associated delay is calculated for each task of the subset as a function of its occurrence probability and a risk delay distribution;

wherein, for each task of the subset, an associated time shifting is calculated comprising time shifting of reference time instants of the associated task start and task end;

wherein, for each at least one task, reference time instants of the associated task start and the task end are calculated;

wherein, for each at least one task, a planning reference baseline is updated with the time shifting, the planning reference baseline comprising the task duration, a priority relation and time position of each task with respect to reference time instants of the project start task and the project end task;

wherein a project critical path for achieving the associated task end is calculated;

wherein a probability distribution and a cumulated probability distribution of time shifting of a time instant of the project end task and of time shifting of each task with respect to the reference baseline are extracted;

wherein a value of an index of sensitivity of time shifting for each task of the subset caused by each risk associated with the task is calculated;

wherein a value of an index of sensitivity of planning to shift each at least one task is calculated;

wherein a value of an index of sensitivity of planning to the delay induced by each risk is calculated;

wherein the values of the indices of sensitivity of time shifting, sensitivity of planning, and sensitivity of planning to the delay caused by each risk are stored in the data repository;

wherein at least the index of the sensitivity of planning to the delay caused by each risk is displayed via the user interface; and

wherein a shifting of tasks of the project based on at least the index of the sensitivity of planning to the delay caused by each risk is implemented.

Preferably according to the invention, the processor is housed on a terminal.

Preferably according to the invention, the terminal is selected from a group consisting of a personal computer, a minicomputer, a main frame computer, a microcomputer, a hand held device, and a telephonic device.

Preferably according to the invention, the processor is housed on a server.

Preferably according to the invention, the server is coupled to a network.

Preferably according to the invention, the network is the Internet.

Preferably according to the invention, the data repository is housed on a server.

It is further specific subject matter of the present invention a computer program product comprising a computer usable medium having control logic stored therein for causing a computer to estimate time shifting of tasks within one or more interlinked projects due to an effect of risks associated with the tasks, and to estimate the impact of each risk on the projects, the computer comprising a data repository and a display device, each project comprising at least one task, a project start task and a project end task, each task having an associated task start, a task end and a task duration, wherein a subset of the at least one task is defined, which comprises one or more tasks each being associated to at least one risk having an occurrence probability and a time delay induced on each task of the subset of the at least one task by the risk, the control logic comprising:

computer readable program code means for calculating, for each risk, an associated delay for each task of the subset as a function of its occurrence probability and a risk delay distribution;

computer readable program code means for calculating, for each task of the subset, an associated time shifting comprising time shifting of reference time instants of the associated task start and task end;

computer readable program code means for calculating, for each at least one task, reference time instants of the associated task start and the task end;

computer readable program code means for updating, for each at least one task, a planning reference baseline with the time shifting, the planning reference baseline comprising the task duration, a priority relation and time position of each task with respect to reference time instants of the project start task and the project end task;

computer readable program code means for calculating a project critical path for achieving the associated task end;

computer readable program code means for extracting a probability distribution and a cumulated probability distribution of time shifting of a time instant of the project end task and of time shifting of each task with respect to the reference baseline;

computer readable program code means for calculating a value of an index of sensitivity of time shifting for each task of the subset caused by each risk associated with the task;

computer readable program code means for calculating a value of an index of sensitivity of planning to shift each at least one task;

computer readable program code means for calculating a value of an index of sensitivity of planning to the delay induced by each risk;

computer readable program code means for storing the values of the indices of sensitivity of time shifting, sensitivity of planning, and sensitivity of planning to the delay caused by each risk in a data repository;

computer readable program code means for displaying at least the index of the sensitivity of planning to the delay caused by each risk on a display device; and

computer readable program code means for implementing a shifting of tasks of the project based on at least the index of the sensitivity of planning to the delay caused by each risk.

## BRIEF DESCRIPTION OF THE FIGURES

The invention will be now described by way of illustration but not by way of limitation, making reference to the figures of the annexed drawings, wherein:

- figure 1 shows the shifting of a task (the time reference of the end of the generic task/milestone with respect to the baseline time);

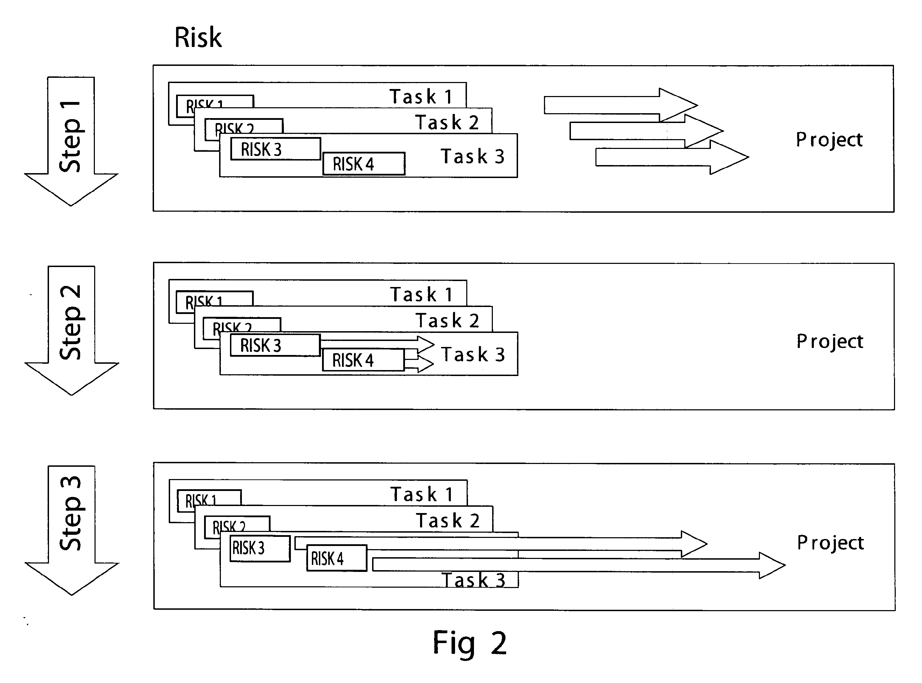

- figure 2 shows the analysis logic according to the present invention;
- figure 3 shows the matrix IM of the present invention;

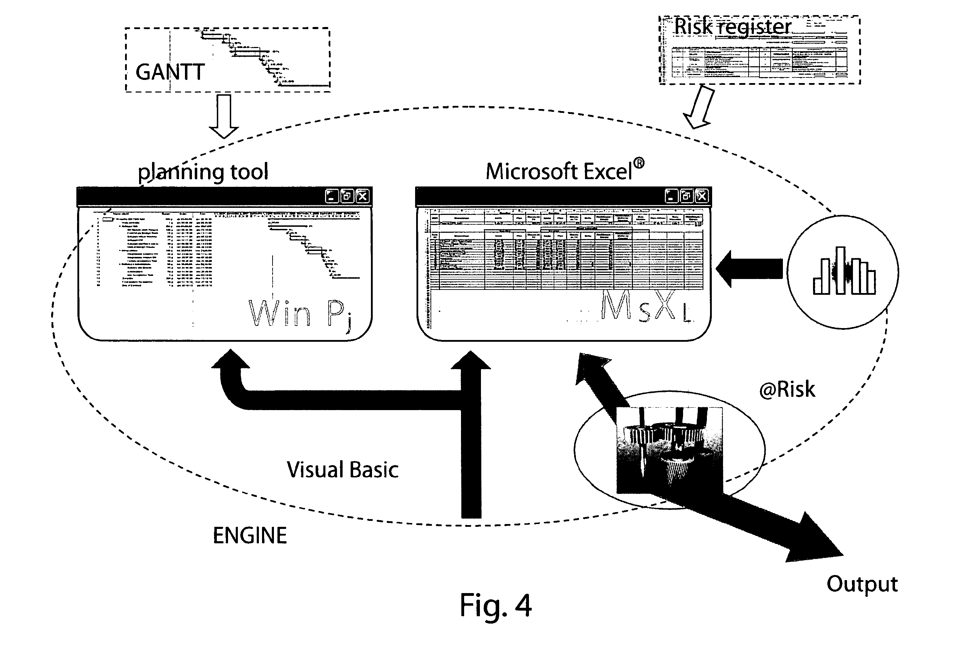

- figure 4 shows an hypothesis of implementation of the invention algorithm;
- figure 5 shows a simplified diagram of the planning of a generic project (alternatively referred to herein as Gannt diagram);
- figure 6 shows a registry of the risks vs. activities of the Gannt;
- figure 7 shows the S-curves of some tasks/milestones of the project under examination;

- figure 8 shows a survey of simulation inputs/outputs and ranking as defined on the basis of the new indexes;
- figure 9 shows a matrix $CI_{jm}$ of the Tasks/Milestones (as resulting from Monte Carlo simulations) multiplied by the number of simulation iterations (index j identifies the risks, index m identifies the tasks/milestones);
- figure 10 shows a matrix $RMSI_{jm}$ of the tasks/milestones as resulting from the Monte Carlo simulation;
- figure 11 shows the apparatus (with connection to risks/planning data) able to output matrix coefficients calculated by method subject-matter of invention (σ task/milestones distributions and matrix coefficients are both visualized in order to have a exhaustive, fast and simple evaluation of temporal impact of risks on the projects);
- figure 12 presents an exemplary system diagram of various hardware components and other features, for use in accordance with aspects of the present invention; and
- figure 13 shows a block diagram of various exemplary system components, for use in accordance with aspects of the present invention.

## DETAILED DESCRIPTION

Aspects of the present invention relate to a system comprised of a computer and connections to a database containing risks data and a database with planning data. These databases can exchange data concerning the matching between risk and the related milestone which they impact directly. The system is able to manage risk/planning data in order to calculate and show a set of data (matrix of coefficients $RMSI^{kjm}$ obtainable by the method, subject-matter of present invention) able to support the management of projects affected by risks in terms of risks priority intervention.

Although two databases are specified, they can be sub-sets of a main project database.

The system comprises code means suitable to carry out, when operating on a computer, the steps of the method subject-matter of the invention.

The user interface of apparatus permits to hide (with a mouse selection) the rows/columns (risk or tasks/milestones) where the values of coefficients are less significant in order to obtain a sub-matrix where the focus is on task/milestone with greater shifting and which highlights the greater risks contributions.

Interrogation of the system can be performed remotely by a client. The system calculates the matrix of coefficients and related output is sent to the client that has interrogated the system.

Another aspect of the present invention relates to a method that, through the estimation of time progression of projects as a function of the associated risks, permits to evaluate the values of matrix coefficients, not obtainable through similar methods evaluating exclusively the time progression as mentioned above.

The invention method is applicable both with reference to the time points of task end and the project milestones, meaning that:

- As project shifting, the shifting of the milestone associated to the closing of the project;
- As shifting of a task $T^m$, the shifting of the milestone associated to the end of the same task. The management of a project needs indicators that are synthetic and easy-to-read, in order to be able to effectively address actions aimed at allowing the fulfillment of the project objects, in terms of planned times and costs. Such indicators must be calculated according to an effective methodology.

The algorithm according to the present invention allows to define, in presence of project risks and by utilizing consistent statistic data analysis models:

● an evaluation of the time shifting (probability distribution of possible shifts) of the project tasks/milestones with respect to a reference baseline planning;
● a measurement of the risks time impact on the achieving of the project tasks/milestones, and in particular a matrix that:

- for each project task/milestone, it determines the contribution (weight) to its shifting that will be given by each risk;
- for each risk identified in the project, it determines the tasks/milestones that will be most influenced by this risk, further ranking them according to this influence.

The algorithm according to the invention is an algorithm that, when applied to a project or multi-project planning (as constituted by interlinked projects), allows to obtain, besides the prior art indexes, some innovative indexes that define the ranking of the riskiness concerning times, which cannot be obtained by using the traditional regression analysis or the classical methods (CPM - "Critical Path Method"/PERT - "Program Evaluation and Review Technique").

To this end, the algorithm receives as input the planning and risk data and processes them by a Monte Carlo simulation.

The input and output data are the following:

- Input:

  - Project GANTT (activities duration, priority constraints between activities, project milestones,
  - Risk Register (univocal identifier for the risks, occurring probability, probabilities distribution as a function of the time shifting of the occurred risk, technical task/milestone whereon the risks impacts). Once known the risk identifier, the impact task/milestone is univocally defined.
  - Output:

    - S-curve, times of shifting of the reference time point of end task and project;
    - Project/Milestone achievement; traffic lights for Milestone and Gate (additional metrics applies to the S-curve on the times, which allow a relevant interpretation, not provided so far);
    - Task Schedule Sensitivity Index (this is already existing in literature), for the sake of easiness indicated as TSSI in the following;
    - Risk Task Sensitivity Index, for the sake of easiness indicated as RTSI in the following;
    - Risk Schedule Sensitivity Index, for the sake of easiness indicated as RSSI in the following;
    - Risk Milestone Sensitivity Index, for the sake of easiness indicated as RMSI in the following and the relevant matricial representation (IM Matrix);

    the last three ones being innovative indexes aimed at ranking the riskiness on times. Concerning the analysis logic, the impact of each risk on the shifting of the project of a specific task/milestone is analyzed by a logic that is structured in several steps.

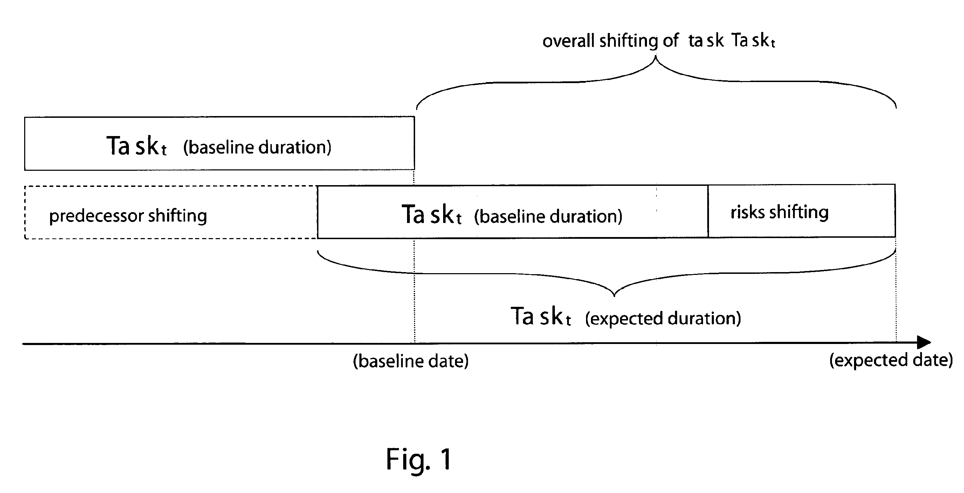

The time shifting of a project is caused by the shifts of the single tasks that compose it. These, in turn, can shift (as shown in figure 1) because of:

- A shifting of the single preceding tasks;
- The possible risks directly impacting on them, causing a delay of the same.

The concepts of "shift" and "delay" as referred to a generic task t, are different with respect to each other, as better illustrated in figure 1.

On the basis of the foregoing, the analysis steps (logical and non-sequential) have been organized as follows:

- Step 1: determining the impact of the task shifting on the project shifting;
- Step 2: determining the impact of the delay associated to the risks of a task on its shifting;
- Step 3: determining the impact of the delay caused by the risks on the shifting of a project.

This description mode is made to simplify the proceeding that is more precisely described further below, in order to have a more immediate understanding. For a similar reason, the mathematical notation is simplified in the following, referring to a detailed part of the description for a more precise formulation.

Step 1

The object of Step 1 is to evaluate how much the shifting of a task impacts on the project shifting.

Let us consider then the following prior art definitions:

- Project Critical Path (PC-P): it represents the path that conditions in a decisive way the achievement of the project objects (it is normally the longest path with respect to time). It is composed by those activities for which a delay cannot be compensated by the subsequent activities and, therefore, implies a definite variation of the end date of the whole project;
- (time) Shifting: difference between the actual task end date (as calculated during a simulation iteration) and the task end date as indicated in the baseline planning;

Let us further define the following quantities:

- $S_t(i)$: shifting of the task t in the iteration i;
- $S_t$: distribution of $S_t(i)$ in the simulation, characterized by a standard deviation value $\sigma_t$ that is proportional to the variation undergone by the task shifting during the simulation;
- $S_p(i)$: shifting of the project on the iteration i;

- $S_p$: distribution of $S_p$ (i) in the simulation, characterised by a value $\sigma_p$ that is proportional to the variation undergone by the project shifting during the simulation.

An index that is already known in literature, the Task Schedule Sensitivity Index TSSI (for the t-th task) defined as:

$$TSSI_t = CI_{tp} \cdot \frac{\sigma_t}{\sigma_p}$$

represents the contribution of the shifting of the end date of task t with respect to that of end project p.

The coefficient $CI_{tp}$ (which multiplies the ratio $\sigma_t/\sigma_p$) takes into account the fact that the generic task influence the project shifting only when the same task finds itself on the project critical path. Such a coefficient, comprised between 0 and 1, corresponds to the number of iterations wherein the task (t) found on the project critical path (PC-P) with respect to the total number of iterations (n) and is known in literature with the name of Task Schedule Criticality Index $CI_{tp}$ defined as in the following:

$$CI_{tp} = \frac{1}{n} \cdot \sum_{i=1}^{n} \alpha_{t_{PC}}(i)$$

wherein n is the number of iterations and $\alpha_{tpC}$ (i) =1 if the task t, during i-th iteration of the Monte Carlo simulation, finds itself on the critical path, and 0 otherwise.

In the following, even for other sensitivity coefficients, the CI notation will be used for the relevant critical state coefficient, which however will be calculated each time in a different way as indicated in the framework of the illustration of the formula. For a more precise notation, we make reference to the subject-matter and the claims of the invention.

Step 2

The object of step 2 is to evaluate how much the variation of the delay associated to one or more risks of a generic task influences on the variation of the shifting of the same task.

Let us define the following quantities:

- $P_j$: probability that the risk j occurs, causing then a variation of the task duration;
- $r_j$(i): delay caused by risk j on task t in the iteration i. The delay causes a variation of the actual duration of the task at iteration i with respect to the initial duration (as indicated in the baseline planning);
- $S_t$ (i): shifting of the task t whereon risk j acts on the iteration i;
- $r_j$: distribution of $r_j$(i) in the simulation, characterized by a standard deviation value $\sigma_j$ that is proportional to the variation of the delay of the risk j on the generic task during the simulation;
- $S_t$: distribution of $s_t$(i) in the simulation, characterised by a value $\sigma_t$ that is proportional to the variation undergone by the shifting of the task t whereon the risk j acts during the simulation.

As a consequence, the ratio $\sigma_j/\sigma_t$ provides the contribution of the delay of the j-th risk on the task shifting.

By analogy with the previously introduced index (TSSI$_t$), we identify a new index, Risk Task Sensitivity Index *RTSI* (for the j-th risk) as defined as follows:

$$RTSI_j = CI_{jt} \cdot \frac{\sigma_j}{\sigma_t}$$

It represents the impact of the variation of the delay on the generic task t (caused by risk j) on the variation of the shifting of the same task. The coefficient $CI_{jt}$, takes into account that the generic risk j impacts on the task shifting only when this risk occurs. Such a coefficient, comprised between 0 and 1, corresponds to the number of iterations wherein risk j occurred with respect to the total iterations number (n). Let us call this new index (not previously given in literature) with the name of Risk Task Occurring Index $CI_j$, that is defined as follows:

$$CI_{j_t} = \frac{1}{n} \cdot \sum_{i=1}^{n} \beta_{j_t}(i)$$

Wherein n is the number of iterations and $\beta_{j_t}(i) = 1$ if the risk j occurred, whilst it is equal to 0 if the risk j did not occur.

Step 3

Since the shifting of a project depends on the shifting of the tasks which, in turn, are subjected to duration variation caused by relevant risks, by using the indexes previously defined one can find, according to the invention, a direct connection between the shifting of the project and the delay of the risks.

Object of step 3 is indeed to evaluate how much the variation of the associated delay to one or more risks weights upon the variation of the duration of the project or, more in general, of the project milestones, utilizing the definitions given in the foregoing.

In analogy with the steps 1 and 2, we identify a new index (not existing in literature) with the name of Risk Schedule Sensitivity Index $RSSI$ (for the j-th risk), defined according to the invention as follows:

$$RSSI_j = CI_{jp} \cdot \frac{\sigma_j}{\sigma_p}$$

This index provides the contribution of the delays associated to the risks on the project shifting, allowing to ranking them according to the value of the contribution.

Thanks to the direct connection between the risks and the project shifting, this index allows to determine a priority among the risks as a function of their impact on the planning delay, to more effectively address suitable mitigation actions.

The coefficient $CI_{jp}$ takes into account the fact that, in the $i$-th iteration, the generic risk j does affects or not the project shift. Such a coefficient is in the range between 0 and 1 and corresponds to the number of iterations wherein the risk j occurred on the project critical path (PC-P) with respect to the total number of iterations (n). We call this new index (unknown in the prior art) with the name of Risk Schedule Criticality Index $CI_{jp}$, which is defined as follows:

$$CI_{jp} = \frac{1}{n} \cdot \sum_{i=1}^{n} \gamma_{j_{PC}}(i)$$

Wherein n is the number of iterations in the Monte Carlo simulation and $\gamma_{jpC}(i) = 1$ if risk j occurred on the project critical path during iteration i, 0 if risk j did not occur, or did but not on the project critical path.

In particular, the coefficient $\gamma_{jpC}(i)$ takes into account the fact that, in the i-th iteration, the generic risk j affects the project shifting only when the same risk occurs on task t ($\beta_{j_t} = 1$) and the last finds itself on the project critical path ($\alpha_{tPC} = 1$). Hence, one has the following equation:

$$\gamma_{j_{PC}}(i) = \beta_{j_t}(i) \cdot \alpha_{t_{PC}}(i)$$

And therefore:

$$CI_{jp} = \frac{1}{n} \cdot \sum_{i=1}^{n} \beta_{j_t}(i) \cdot \alpha_{t_{PC}}(i)$$

In the end, in analogy with the foregoing, one can define the Risk Schedule Sensitivity Index which defines the connection between risks and project, meaning here for shifting of the project the shifting of the end milestone of the project.

Further step

Now, by generalizing the remarks made in the foregoing, one can apply the same concepts to the case of a generic project task/milestone. To do this, it is necessary to introduce the following definition of milestone critical path (PC-m), which represents the path that conditions in a decisive way the achievement of a specific task/milestone (that is normally the longest path in terms of time): it is composed by those activities for which a delay cannot be compensated with the subsequent activities and, therefore, causes certainly a nonzero variation of the date of the task/ milestone.

Therefore a new index can be defined(unknown in the prior art) which provides the contribution of the delays due to risks on the shifting of a specific milestone that is being monitored. We call Risk Milestone Sensitivity Index *RMSI* (for the j-th risk which affects the m-th milestone), defined as:

$$RMSI_{jm} = CI_{jm} \frac{\sigma_j}{\sigma_m}$$

wherein:

$$CI_{jm} = \frac{1}{n} \cdot \sum_{i=1}^{n} \gamma_{jm}(i)$$

wherein n is the number of iterations, m counts the m-th milestone under observation, and $\gamma_{jm}(i) = 1$ if risk j did occur on critical path of the m-th milestone during the i-th iteration, 0 otherwise.

This index allows determining a priority among risks as a function of their impact on the delay of the milestone to be controlled, to address more effectively the suitable mitigation actions.

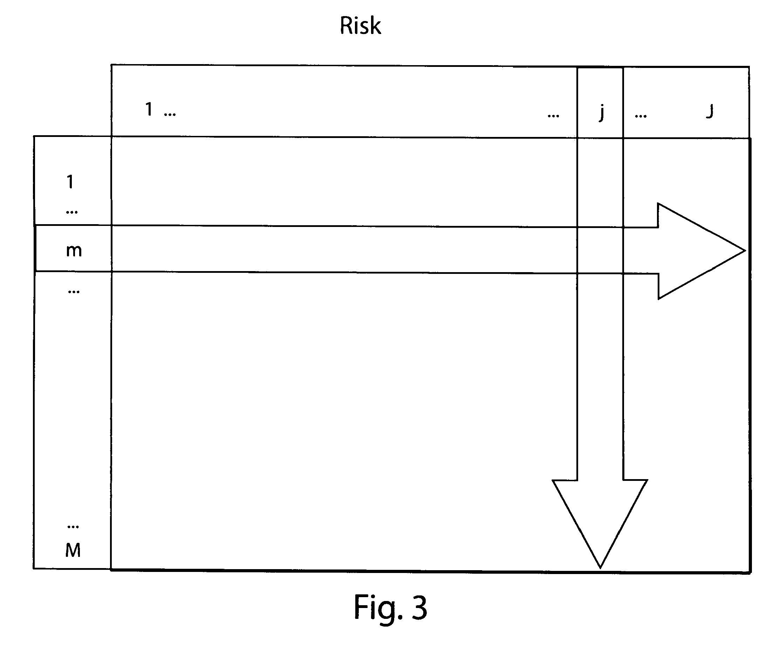

By using the indexes $RMSI_{jm}$, it is possible to construct, according to the invention, a matrix of Milestone Impact that is here called "IM Matrix" and is composed by M rows and J columns (figure 3). This represents the impact of each risk (j) on each milestone (m) of the project. The matrix can be read:

■ Horizontally, by living the information of the risks ranking with respect to the achieving of the milestone m,
■ Vertically, by providing the indication of the milestone mostly influenced by a risk j.

Application example

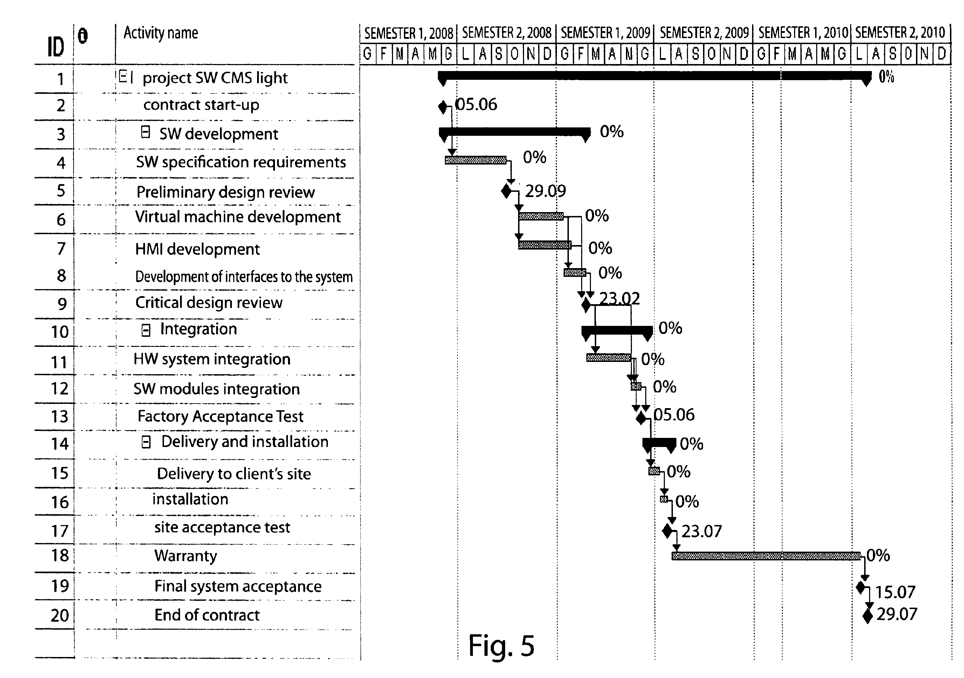

In the following, an example of realization of the invention on a generic project is illustrated, whose simplified planning is given in Figure 5.

In the example is considered, for the sake of simplicity and in a fictitious way, that each planning activity ends with a milestone. In such a way, in the matrix IM activities or milestones will be reported indifferently, without any generality loss.

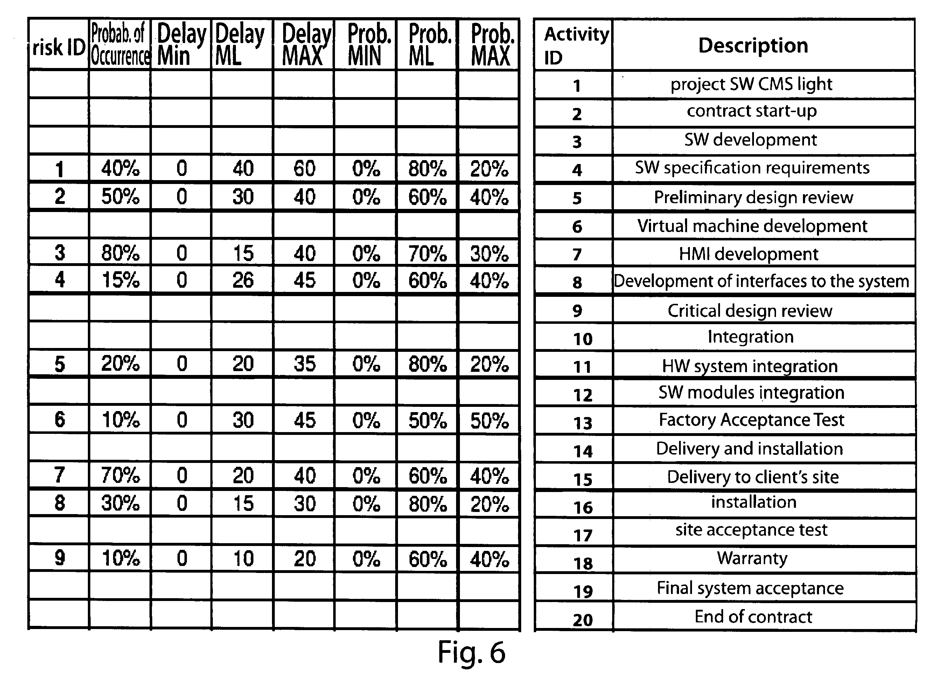

In this project one has assumed that one has a risks register formed by 9 generic risks that impact on as many project activities, according to a correspondence highlighted in figure 6.

The parameters of the example are therefore the following:

- number of considered activities/milestones: M = 20;
- number of considered risks: J = 9.

With the above-mentioned input data a Monte Carlo simulation has been carried out, which allows to determine the project task/milestone probability density function associated to the risks effects.

For the simulation, a number of iterations equal to 1000 has been set.

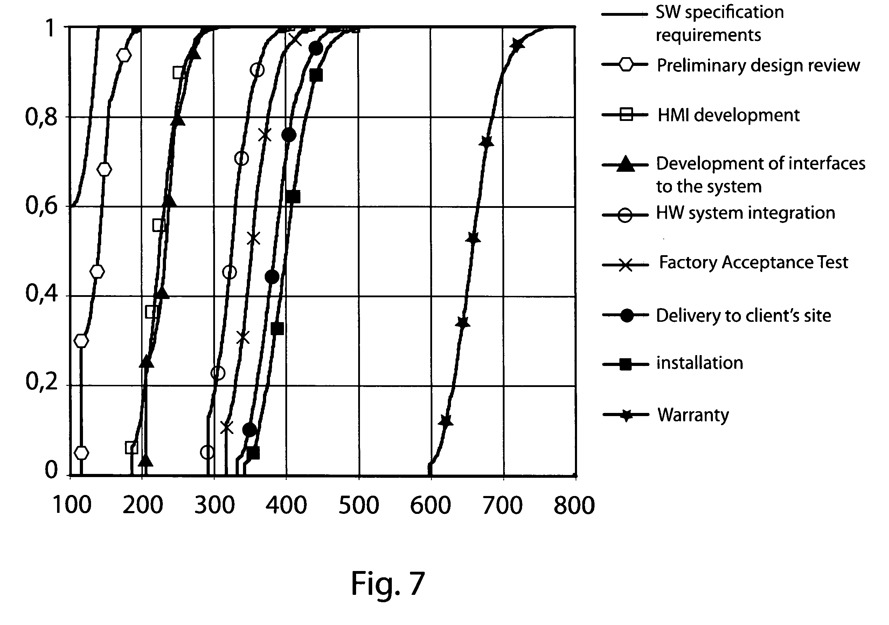

From the integral of the probability density one obtains the cumulated probability called "Curve S" or "time risk profile" and reported in figure 7 for some tasks/milestones of the project under examination.

The S-curves represent the shifting (deriving from the occurring of the risks) of the date of the end of each task/milestone under observation with respect to the relevant baseline date. The values reported in the abscissas are expressed in working days starting from the planned date for the project start-off. The values in ordinates represent the probability to limit the shifting within the value reported in abscissa.

From the curve, it is possible to determine:

1. given a shift, the value of probability of non- exceeding such a shifting;
2. given a probability, the maximum shifting value associated to the probability.

As an example, let us consider the risk profile relevant to the task "guarantee", whose completion date is planned at $T_0$+600 working days.

Once fixed a shifting of 100 working days, the probability that one will not exceed it is of 90%, whilst the maximum shifting associated to a probability of 40% is of 50 working days.

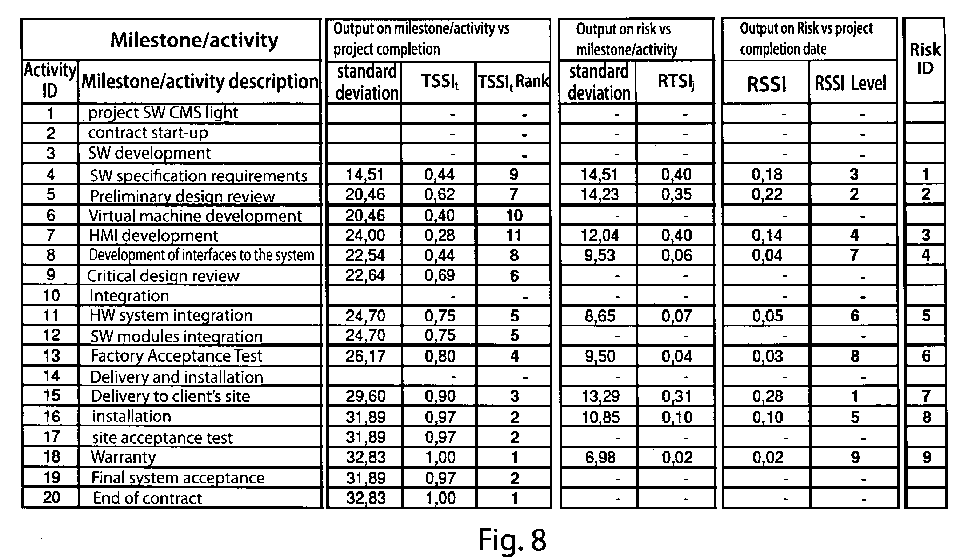

In figure 8 the above-described three indexes are reported and compared. In the column "Output on Task/ Milestone vs Project" is reported the standard deviation of the tasks/milestones shifting and the associated "Task Schedule Sensitivity Index" ($TSSI_t$) which represents the impact of such a shifting on the variation of the final date on the project. In the column "Output on the Risks vs Tasks/Milestones" is reported the standard deviation of the delay of the risks and the "Risk Task Sensitivity Index" ($RTSI_j$) which represents their impact on the shifting of the task/milestone to which they are associated. Finally, in the column "Output on Risks vs Project" the "Risk Schedule Sensitivity Index" ($RSSI_j$) is reported, which represents the impact of the risks on the project end. By the comparison between the rankings of the indexes $TSSI_t$ and $RSSI_j$, one can derive that the weight that a risk has on the end of the project is different from the weight of the relevant task/milestone on the same project.

In particular, the index $RSSI_j$ allows to determine in a direct way the riskinesses that have a predominant effect on the project shifting, to the end of addressing the actions. In the example, the first three risks to which attention should be paid are id=7 (that acts on task 15 - whose $RSSI_j$ value is the highest) and, when $RSSI_j$ decreases, the id=2 (on task 5) and id=1 (on task 4).

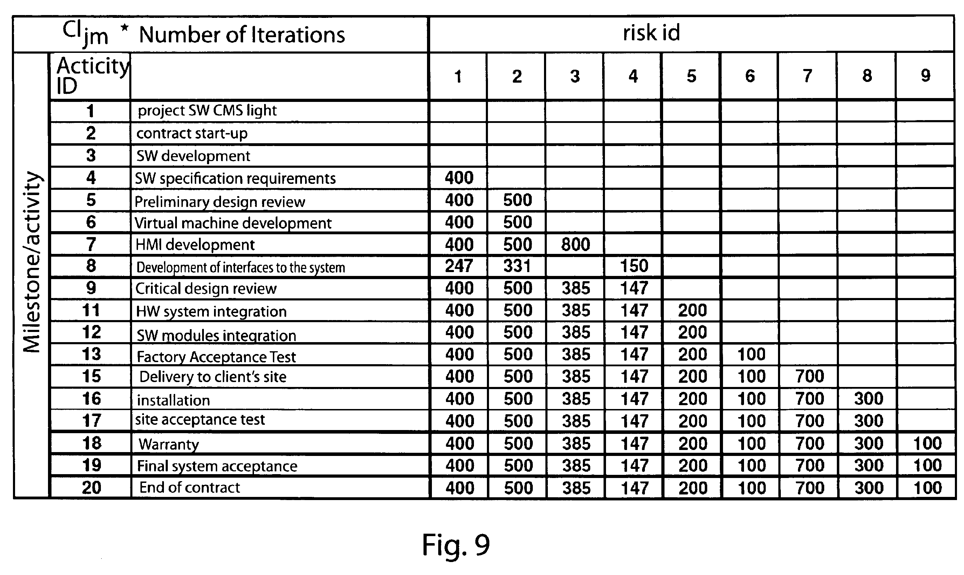

Figure 9 reports, for the tasks and milestones, the coefficients $CI_{jm}$ obtained by the above-described formula multiplied by the total number of iterations (1000).

The obtained values indicate the number of times where the j-th risk occurred and the associated task found itself on the critical path (of the project or the tasks/milestones taken as reference and reported in the figure) during the simulation.

In the case one takes a task and a relevant associated risk as a reference, the value that one will obtain is equal to the risk occurring probability multiplied by the total number of iterations. This because the risk will find itself on the critical path of the task to which is associated.

In the example, the risk ID=3 has a value equal to 800 on task 7, indeed the risk has a occurring probability equal to 80% and the considered iterations are equal to 1000.

The case is different when one takes as a reference a task and observes the effect of the risks associated to predecessor tasks. In this case one has the combined effect of the risks delay and task shifting that cannot be determined in another manner by simple deductions or similar method.

In this example, Task 7 and 8 have each an own risk associated (respectively ID 3 and ID 4). Furthermore, they are activities that are independent from each other, therefore in the simulation the risk ID=3 has a null value on Task 8 (figure 9). Finally, note that the occurring of risk ID 3 provokes, in some simulation iterations, a variation of the project critical path between risk id=1 and task 8. This can be deducted by observing the effect of risk ID 1 on the various tasks/milestones and in particular on task 8. Indeed in the 400 iterations wherein risk ID 1 occurred, task 8 has found itself on the critical path only 247 times (value of $C_{jm}$ in figure 9). In the remaining 153 iterations (wherein the risk id=1 occurred), the effects of risk ID 3 caused a modification to the critical path. The critical path up to task 8 has changed excluding the task under consideration. The last does not come out to be critical, was not affected by the effect produced by the occurring of risk id=1.

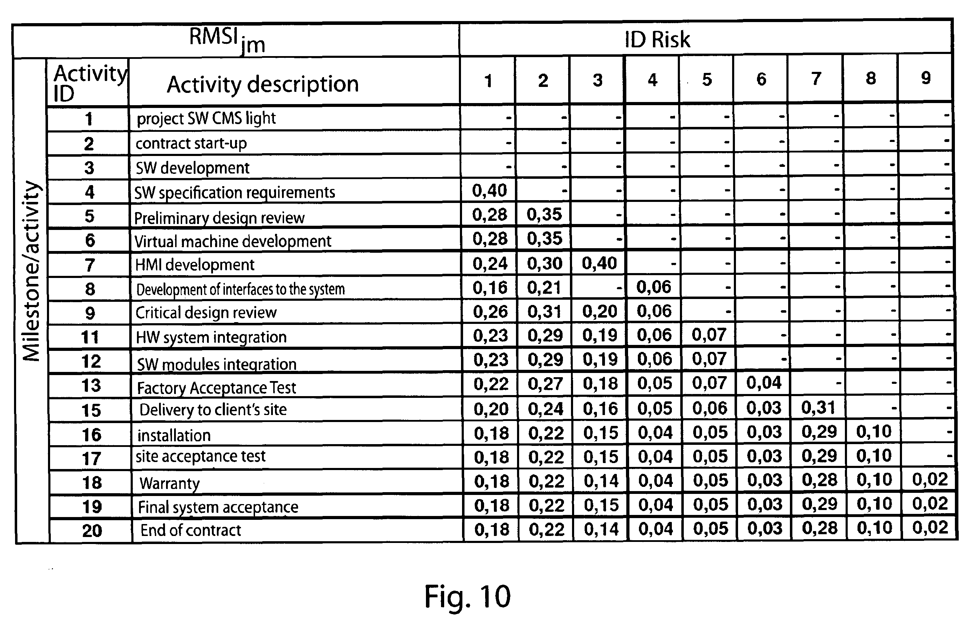

In figure 10 the IM Matrix is reported, which contains the indexes $RMSI_{jm}$, i.e. the weight of each risk on the various tasks/milestones. The "triangular" structure of the data confirms that the risks have an impact on the planning in relation to the sequence of activities that are present in Diagram A.

From a reading by rows of the IM matrix, it is possible to ranks the risks as a function of their impact on a specific milestone.

In the example, the milestone 13 (FAT) is influenced by 6 risks (ID 1 — 6) and the risk that mainly impacts on the milestone is not ID 6, i.e. the risk associated to the same milestone, rather risk ID 2 associated to milestone 5 ("Preliminary Design Review").

From a reading by columns of the IM matrix it is possible to evaluate the impact of a specific risk on the whole planning.

The matrix coefficients output is not obtainable by similar method to evaluate projects temporal shifting.

In the example, one can observe that each risk has a larger impact on the task/milestone to which is associated. More in general, one can affirm that the presence of more risks and/or the variability of the critical path in the simulation can entail a progressive reduction of such an impact for the subsequent tasks/milestones.

Formal description of the method calculations

According to a general aspect, the invention concerns a computer assisted method for estimating of the time shifting of the activities of one or more interlinked projects, due to the effect of risks associated to the activities, the computer comprising a data repository and a display device, each project comprising:

- a set of tasks $T^1, T^2, ... T^m ...,T^P$ linked by planning constraints, and having respective duration of $D^1, D^2, ... D^m, ... D^p$, where m and P are positive integer numbers satisfying a condition $1 \leq m \leq P$, a task $T^P$ corresponding to an activity of project-end;
- a planning reference baseline comprising: duration of the tasks, priority relation and time position of the tasks with respect to tasks being associated respective $T_{10}^1, T_{10}^2,.... T_{10}^m ... T_{10}^P$ reference time instants of task start and the respective $T_{f0}^1, T_{f0}^2,...T_{f0}^m ... T_{f0}^P$ reference time instants of end task;
- a set of tasks having null duration that are defined as milestone;
- a tasks subset $T^1, T^2, ... T^j ..., T^J$ with $1 \leq j \leq J$ and $1 \leq J \leq P$, for each task $T^j$ being associated $K^j$ risks, each risk being indicated with $R^{kj}$, with $1 \leq K \leq K^j$ and k positive integer number;
- a probability $\Pi^{kj}$ of occurrence of each risk $R^{kj}$;
- a probability distribution $G^{kj}$ of the values of time delay induced on task $T^j$ as a consequence of the occurrence of risk $R^{kj}$;
  wherein each task and each risk are stored in the data repository, the method comprising:

    A. performing a Monte Carlo simulation constituted by N interactions, with N being a positive integer, wherein at iteration i, with $1 \leq i \leq N$, the following steps are performed:

        A.1 calculating for each risk $R^{kj}$ an associated duration variation $\delta_i^{kj}$ as a function of the occurrence probability $\Pi^{kj}$ and distribution $G^{kj}$;

        A.2 calculating the total duration variation associated to task $T^j$ according to the formula:

$$\cdot \ \Delta D_i^j = \sum_{k=1}^{K^j} \delta_i^{kj}$$

        A.3 updating the baseline planning with the total duration variations associated to tasks $T^j$, obtaining for each task $T^m$:

        A.3.1 the reference time instants of start $Ti_i^m$ and end $Tf_i^m$ of the tasks;
        A.3.2 the time shifting of the tasks $ST_i^m$ as:

$$ST_i^m = Tf_i^m - Tf_0^m$$

        if $T^m$ belongs to the set of tasks $T^j$ then:

$$ST_i^m = \Delta D_i^m + SP_i^m$$

        otherwise:

$$ST_i^m = SP_i^m$$

wherein $SP_i^m$ represents the contribution to the time shifting of task $T^m$ caused by the preceding tasks and is equal to:

$$SP_i^m = \tau i_i^m - \tau i_0^m$$

A.4 calculating coefficients $\beta^{kj}(i)$ defined as: $\beta^{kj}(i) = 1$ if the risk $R^{kj}$ occurred on the task $T^j$ during iteration i, 0 otherwise;

A.5 calculating a project critical path PC-P(i);

A.6 calculating coefficients $\alpha^m_{PC-P}(i)$ so defined: $\alpha^m_{PC-P}(i) = 1$ if the task $T^m$ finds itself on the project critical path PC-P(i) and 0 otherwise;

A.7 calculating coefficients $\gamma^{kj}_{PC-P}(i)$ so defined:

$$\gamma^{kj}_{PC-P}(i) = \beta^{kj}(i) \bullet \alpha^j_{PC-P}(i)$$

wherein $\gamma^{kj}_{PC-P}(i) = 1$ if the risk $R^{kj}$ occurs on the project critical path PC-P(i) at the iteration i, and 0 otherwise;

A.8 calculating for each task $T^m$ the critical path PC-m(i) for an achieving of an end, as defined with the time instant $Tf_i^m$, of the task $T^m$;

A.9 calculating coefficients $\alpha^m_{PC-m}(i)$ defined as: $\alpha^m_{PC-m}(i) = 1$ if the task $T^m$ finds itself on the critical path PC-m(i) and 0 otherwise;

A.10 calculating the coefficients $\gamma^{kj}_{PC-m}(i)$ defined as:

$$\gamma^{kj}_{PC-m}(i) = \beta^{kj}(i) \bullet \alpha^j_{PC-m}(i)$$

wherein $\gamma^{kj}_{PC-m}(i) = 1$ if the risk $R^{kj}$ occurs on the critical path for the achieving of the end of the task $T^m$ and 0 otherwise;

B. at the end of the N iterations of the Monte Carlo simulation of step A, the performing of the following steps:

B.1 extracting the probability distribution and the cumulated probability distribution, that is called "S-curve", of the shifting of the end time instant of the project $ST^P$ with respect to the reference baseline $Tf_0^P$ starting from the N values $ST_i^p$, being the distributions characterised by a $\sigma(ST^P)$ standard deviation;

B.2 extracting the probability distribution and the cumulated probability distribution, that is called "S-curve", of the time shifting of each one of the tasks $T^m$ with respect to the reference baseline $Tf_0^m$ starting from the N values $ST_i^m$, being the distribution characterised by a $\sigma(ST^m)$ standard deviation.

Once extracted the above probability distributions, one can perform the following step:

B.3 calculating the values of the index $RTSI^{kj}$ of sensitivity to delay task $T^j$ as caused by risk $R^{kj}$, defined as follows:

$$RTSI^{kj} = CI^{kj} \bullet (\sigma(\delta^{kj})/\sigma(ST^j))$$

wherein $CI^{kj}$, comprised between 0 and 1, is the occurrence coefficient of the risk $R^{kj}$ defined as:

$$CI^{kj} = (1/N) \bullet \Sigma^N_{i=1} \beta^{kj}(i).$$

Similarly, one can perform the following steps:

B.4 calculating the values of the index $TSSI^m$ of sensitivity of planning to shift task $T^m$, defined as:

$$TSSI^m = CI^{mP} \cdot (\sigma(ST^m)/\sigma(ST^P))$$

wherein $CI^{mP}$, comprised between 0 and 1, is the coefficient of belonging of task $T^m$ to the project critical path, defined as:

$$CI^{mP} = (1/N) \cdot \Sigma^N_{i=1} \ \alpha^m_{PC-P}(i)$$

B.5 calculating the standard deviation $\sigma(\delta^{kj})$ of the probability distribution of the risk $R^{kj}$, starting from the N values $\delta_i^{kj}$.

According to a specific aspect of the invention, one can perform the following step:

B.6 calculating the values of the index $RSSI^{kj}$ of the sensitivity of the planning to the delay caused by each risk $R^{kj}$, that is defined as follows:

$$RSSI^{kj} = CI^{kjP} \cdot (\sigma(\delta^{kj})/\sigma(ST^P))$$

wherein $CI^{kjP}$, comprised between 0 and 1, is the occurrence coefficient of the risk $R^{kj}$ on the project critical path, so defined:

$$CI^{kjP} = (1/N) \cdot \Sigma^N_{i=1} \ \gamma^{kj}_{PC-P}(i).$$

According to another specific aspect of the invention, one can perform the following step:

B.7 calculating the values of the index $RMSI^{kjm}$ of sensitivity of the shifting of a generic task $T^m$ to the delay caused by the risk $R^{kj}$, as follows:

$$RMSI^{kjm} = CI^{kjm} \cdot (\sigma(\delta^{kj}) / \sigma(ST^m))$$

wherein $CI^{kjm}$, having a value between 0 and 1, is the occurrence coefficient of the risk $R^{kj}$ on the critical path for the achieving of the end of the task $T^m$, so defined:

$$CI^{kjm} = (1/N) \cdot \Sigma^N_{i=1} \ \gamma^{kj}_{PC-m}(i).$$

After the calculation of the above index/indices, according to the method, the index/indices values are stored in the data repository.

From this repository, such data can be extracted and displayed on the display device.

Moreover, a progression of the index/indices values over time can be extracted and visualized on the display device. In accordance with an aspect of the invention:

- the project shifting is intended as the shifting of the milestone associated to the closing of the project;
- the shifting of the task $T^m$ is intended as the shifting of the milestone associated to the end of the same task;
- the index:

$$RTSI^{kj} = CI^{kj} \cdot (\sigma(\delta^{kj})/\sigma(ST^j))$$

is intended as the index of sensitivity of the milestone of the end of task $T^j$ to the delay caused by the risk $R^{kj}$.

In accordance to another aspect of the invention,:

- the project shifting is intended as the shifting of the milestone associated to the end of the project;
- the shifting of a task $T^m$ is intended as the shifting of the milestone associated to the end of the same task;
- the index:

$$TSSI^m = CI^{mP} \cdot (\sigma(ST^m)/\sigma(ST^P))$$

is intended as the index of sensitivity of the milestone of project end to the shifting of the milestone of the end of the task $T^m$; and
- the index:

$$RSSI^{kj} = CI^{kjP} \cdot (\sigma(\delta^{kj})/\sigma(ST^P))$$

is intended as index of sensitivity of the milestone of the project end to the delay caused by a risk $R^{kj}$.
In accordance to another aspect of the invention:

- the project shifting is intended as the shifting of the milestone associated to the project end;
- the shifting of a task $T^m$ is intended as the shifting of the milestone associated to the end of the same task;
- the index:

$$RMSI^{kjm} = CI^{kjm} \cdot (\sigma(\delta^{kj})/\sigma(ST^m))$$

is intended as index of sensitivity of the milestone of the end of the task $T^m$ to the delay caused by a risk $R^{kj}$.

Method implementation and system architecture

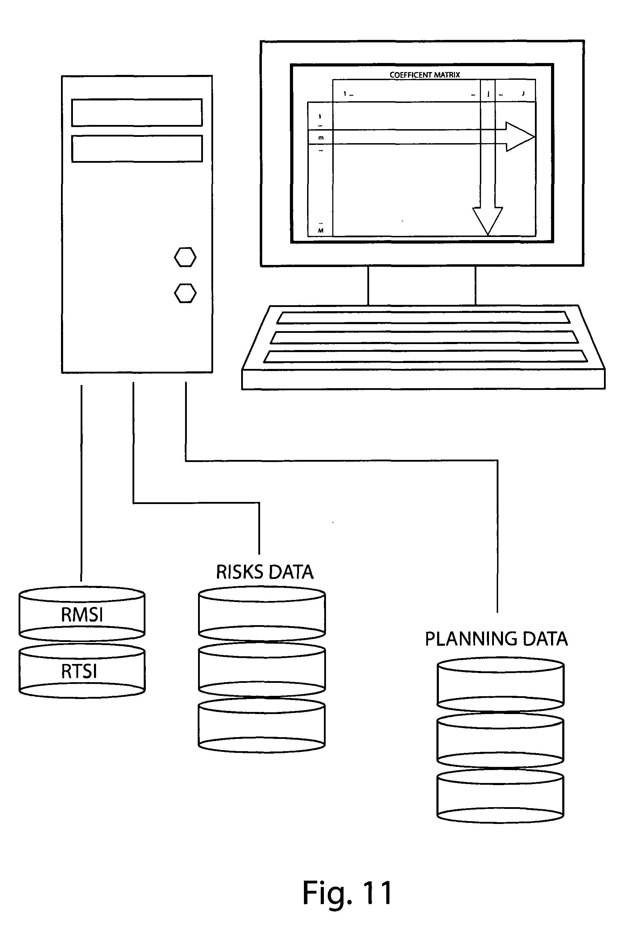

Figure 11 shows the system architecture for an exemplary implementation of the invention method, comprising a computer connected to two different databases, one for the risks and the other for the activities/tasks. The value of the new coefficients is calculated by the method, which is one of the objects of the disclosure, that uses the values in the two databases, and so that the user can have an immediate understanding of the project risk priority so that these coefficients represent the evolution of the database content. The new (and prior art) coefficients can be stored in a third database for each recalculation step, so that the coefficients' progression over time can be extracted and visualized to analyze the influence over time of the risks on the tasks.
Hence, such an apparatus allows the user to speed up the meta-analysis process of the databases' content, which traditionally takes a long time and significant calculation resources.
The apparatus according to the invention can be implemented in a client/server architecture, which is effective for management of inter-linked projects, since:

- at least a client computer can be provided for each project, by which users can update data relating to activities and risks concerning that project;
- a server can update the two databases according to a pre-defined set of rules;
- the server can further store in a memory pre-defined index values connecting the content of the two databases (activities and risks), so that
- each client can access this memory or download the relevant information (index/indices values) to analyze the result of the updating by all the clients up to a given time instant, without downloading the whole content of the databases or navigate through them, occupying the connection between client and server;
- the server can store the history of the index values along time in a specific, third database, so that a client can extract only from this database information about the variation of such values along time.

The index values are specific to risks and activities as above described. The index values are the values arranged in the matrix of coefficients $RMSI^{kjm}$ obtainable by the invention method.

The system/method described in accordance with the present disclosure could provide, to draw an analogy between this method and the method presented in the above-mentioned document US 2004138897 A1, the link between the drivers and the effect on the project, thus providing a priority scale of the risk drivers or causes such that suggests the best intervention on the drivers or causes, according to the priority scale, to reduce the execution risk. The method of aspects of the present invention obtains different information from the document US 2004138897 A1, where only effects are evaluated in a iterative manner. Indeed this last document does not provide any indication on the manner in which the drivers have to be managed.

With respect to above-mentioned document WO2006138141, the method described in the present document permit to obtain a link with each risk and each task/milestone so that the impact of each risk can be individually assessed and distinguished from other risks that may impact on the same task. Particularly, each row of Matrix coefficients represents the project risk priority for each task/milestone.

By the traditional methods, the two databases would have no interlinking information, and therefore the meta-analysis would require a novel calculation by the server even without updating of the same databases. The access to the information about the interaction and evolution of the two databases would have been impossible.

An exemplary implementation is suitable to be used with mobile phones, since the computational load of the server (that can be even a smart phone or handheld computer with mobile connection) is not high and the data to be exchange is limited. The index values can be visualized as a matrix on the handheld and values below a user-defined threshold can be prevented from being visualized, together with rows and columns that have no values allowed for visualization, so that only a sub-matrix is visualized on the handheld screen. This is in particularly suitable to be implemented via SMS communications.

The latter visualization method can of course be used even with a standard PC screen, since the analysis of the situation of the interdependent evolution of the databases is immediately clear.

With the method according to the invention, one can evaluate the time progression of projects with reference to risk contribution associated with events that can occur causing the project phases shifting.

Even a small enterprise of services that manages projects for clients can easily update and manage the evolution of the activities of the project, directly at the clients' sites.

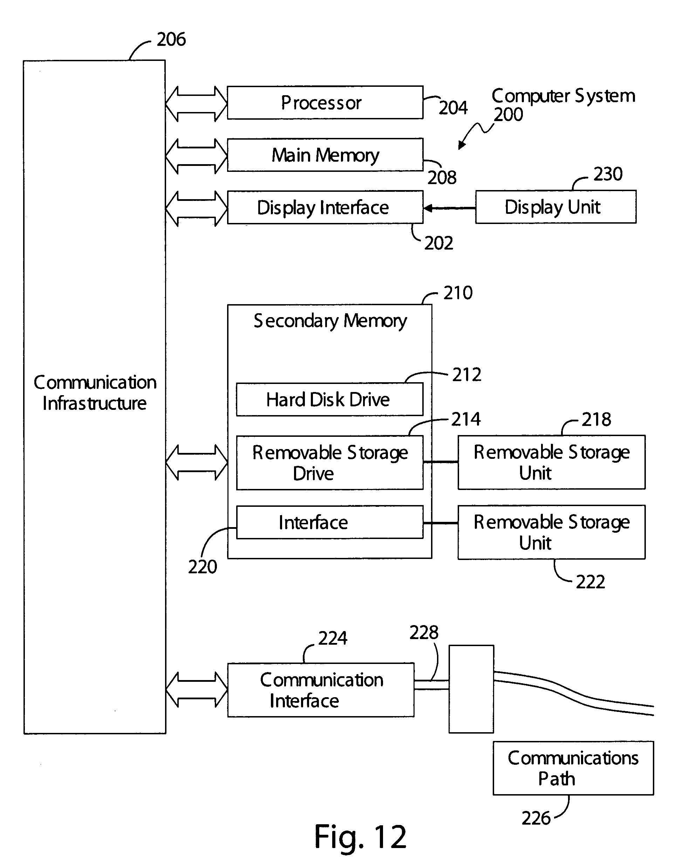

In some variations, aspects of the present invention may be directed toward one or more computer systems capable of carrying out the functionality described herein. An example of such a computer system 200 is shown in FIG. 12.

Computer system 200 includes one or more processors, such as processor 204. The processor 204 is connected to a communication infrastructure 206 (e.g., a communications bus, cross-over bar, or network). Various software aspects are described in terms of this exemplary computer system. After reading this description, it will become apparent to a person skilled in the relevant art(s) how to implement the invention using other computer systems and/or architectures.

Computer system 200 can include a display interface 202 that forwards graphics, text, and other data from the communication infrastructure 206 (or from a frame buffer not shown) for display on a display unit 230. Computer system 200 also includes a main memory 208, preferably random access memory (RAM), and may also include a secondary memory 210. The secondary memory 210 may include, for example, a hard disk drive 212 and/or a removable storage drive 214, representing a floppy disk drive, a magnetic tape drive, an optical disk drive, etc. The removable storage drive 214 reads from and/or writes to a removable storage unit 218 in a well-known manner. Removable storage unit 218, represents a floppy disk, magnetic tape, optical disk, etc., which is read by and written to removable storage drive 214. As will be appreciated, the removable storage unit 218 includes a computer usable storage medium having stored therein computer software and/or data.

In alternative aspects, secondary memory 210 may include other similar devices for allowing computer programs or other instructions to be loaded into computer system 200. Such devices may include, for example, a removable storage unit 222 and an interface 220. Examples of such may include a program cartridge and cartridge interface (such as that found in video game devices), a removable memory chip (such as an erasable programmable read only memory (EPROM), or programmable read only memory (PROM)) and associated socket, and other removable storage units 222 and interfaces 220, which allow software and data to be transferred from the removable storage unit 222 to computer system 200.

Computer system 200 may also include a communications interface 224. Communications interface 224 allows software and data to be transferred between computer system 200 and external devices. Examples of communications interface 224 may include a modem, a network interface (such as an Ethernet card), a communications port, a Personal Computer Memory Card International Association (PCMCIA) slot and card, etc. Software and data transferred via communications interface 224 are in the form of signals 228, which may be electronic, electromagnetic, optical or other signals capable of being received by communications interface 224. These signals 228 are provided to communications interface 224 via a communications path (e.g., channel) 226. This path 226 carries signals 228 and may be implemented using wire or cable, fiber optics, a telephone line, a cellular link, a radio frequency (RF) link and/or other communications channels. In this document, the terms "computer program medium" and "computer usable medium" are used to refer generally to media such as a removable storage drive 214, a hard disk installed in hard disk drive 212, and signals 228. These computer program products provide software to the computer system 200. The invention is directed to such computer program products.

Computer programs (also referred to as computer control logic) are stored in main memory 208 and/or secondary memory 210. Computer programs may also be received via communications interface 224. Such computer programs, when executed, enable the computer system 200 to perform the features of the present invention, as discussed herein. In particular, the computer programs, when executed, enable the processor 210 to perform the features of the present invention. Accordingly, such computer programs represent controllers of the computer system 200.

In an aspect where the invention is implemented using software, the software may be stored in a computer program product and loaded into computer system 200 using removable storage drive 214, hard drive 212, or communications interface 220. The control logic (software), when executed by the processor 204, causes the processor 204 to perform the functions of the invention as described herein. In another aspect, the invention is implemented primarily in hardware using, for example, hardware components, such as application specific integrated circuits (ASICs). Implementation of the hardware state machine so as to perform the functions described herein will be apparent to persons skilled in the relevant art(s).

In yet another aspect, the invention is implemented using a combination of both hardware and software.

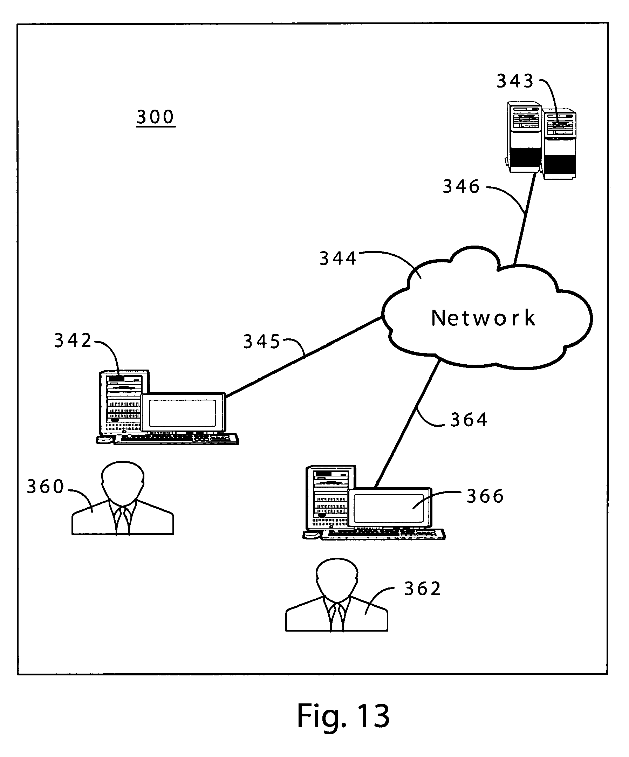

FIG. 13 shows a communication system 300 involving use of various features in accordance with aspects of the present invention. The communication system 300 includes one or more assessors 360, 362 (also referred to interchangeably herein as one or more "users") and one or more terminals 342, 366 accessible by the one or more accessors 360, 362. In one aspect, operations in accordance with aspects of the present invention is, for example, input and/or accessed by an accessor 360 via terminal 342, such as personal computers (PCs), minicomputers, mainframe computers, microcomputers, telephonic devices, or wireless devices, such as personal digital assistants ("PDAs") or a hand-held wireless devices coupled to a remote device 343, such as a server, PC, minicomputer, mainframe computer, microcomputer, or other device having a processor and a repository for data and/or connection to a repository for data, via, for example, a network 344, such as the Internet or an intranet, and couplings 345, 364. The couplings 345, 364 include, for example, wired, wireless, or fiber optic links. In another aspect, the method and system of the present invention operate in a stand-alone environment, such as on a single terminal.

Aspects of the present invention have been above described and some modifications of this invention have been suggested, but it should be understood that those skilled in the art can make variations and changes, without so departing from the related scope of protection, as defined by the following claims.

**Claims**

1.  A computer-implemented method for estimating time shifting of tasks of one or more interlinked projects, due to an effect of risks associated with the tasks, and estimating the impact of each risk on the tasks, the computer being connected to a data repository and to a display device, each project comprising:

    - a planning reference baseline including:
    - a set of tasks linked by planning constraints, and having respective durations;
    - a set of tasks having null duration that are defined as milestones;
    - a tasks subset, for each task of this subset being associated one or more risks;
    - a probability of occurrence of each risk;
    - a delay associated to each risk;
    - a probability distribution of delays associated to risks, having a standard deviation $\sigma(\delta)$;

    wherein each task is stored in a first database within the data repository and each risk is stored in a second database within the data repository, the method comprising:

    A. performing a Monte Carlo simulation constituted by N interactions, with N being a positive integer, wherein at iteration i, with $1 \leq i \leq N$, the following steps are performed:

      A.1 calculating for each risk an associated duration variation $\delta$ as a function of the risk occurrence probability and distribution;
      A.2 for each task of said subset of tasks, calculating a total duration variation $\Delta D$ associated to the task;
      A.3 updating the baseline planning with said total duration variations, obtaining for each task the reference time instants of start and end of the tasks, and the time shifting of the tasks;

A.4 calculating coefficients $\beta(i)$ defined as: $\beta(i) = 1$ if a risk occurred on the task of said subset during iteration i, 0 otherwise;

A.5 calculating a project critical path PC-P(i);

A.6 calculating second coefficients $\alpha_{PC-P}(i)$ so defined: $\alpha_{PC-P}(i) = 1$ if the task finds itself on the project critical path PC-P(i) and 0 otherwise;

A.7 for the end task of project and each risk, calculating third coefficients $Y_{PC-P}(i)$ so defined:

$$Y_{PC-P}(i) = \beta(i) \cdot \alpha_{PC-P}(i)$$

wherein $Y_{PC-P}(i) = 1$ if the risk occurs on the project critical path PC-P(i) at the iteration I, and 0 otherwise;

B. at the end of the N iterations of the Monte Carlo simulation of step A, performing the following steps:

B.1 extracting the probability distribution and the cumulated probability distribution, that is called "S-curve", of the shifting $ST^P$ of the end time instant of the project with respect to the reference baseline starting from the N values of time shiftings of the tasks, being the distributions **characterised by** a $\sigma(ST^P)$ standard deviation;

B.6 calculating the values of a sensitivity index RSSI accounting for the sensitivity of the end project task to the delay caused by each risk, that is defined as follows:

$$RSSI = CI^P \cdot (\sigma(\delta)/\sigma(ST^P))$$

wherein $CI^P$, comprised between 0 and 1, is the occurrence coefficient of the risk on the project critical path, so defined:

$$CI^P = (1/N) \cdot \Sigma^N_{i=1} Y_{PC-P}(i);$$

C.1 storing the RSSI sensitivity index values in a memory area, within the data repository, that can be accessed independently from said first and second databases;

C.3 displaying the RSSI sensitivity index values on the display device.

2. The method according to claim 1, **characterised in that** it further comprises, within step B:

A.8 calculating for each task the critical path PC-m(i) for an achieving of an end of the task;

A.9 for each task, calculating coefficients $\alpha_{PC-m}(i)$ defined as: $\alpha_{PC-m}(i) = 1$ if the task finds itself on the critical path PC-m(i) and 0 otherwise;

A.10 for each task of the subset of tasks and each risk, calculating the coefficients $\gamma_{PC-m}(i)$ defined as:

$$\gamma_{PC-m}(i) = \beta(i) \cdot \alpha_{PC-m}(i)$$

wherein $\gamma_{PC-m}(i) = 1$ if the risk occurs on the critical path for the achieving of the end of the task and 0 otherwise;

and within step B:

B.7 for each task, calculating the values of the index *RMSI* of sensitivity of the shifting of a milestone to the delay caused by a risk, as follows:

$$RMSI = CI \cdot (\sigma(\delta)/\sigma(ST))$$

wherein CI, having a value between 0 and 1, is the occurrence coefficient of the risk on the critical path for the achieving of the end of the task, so defined:

$$CI = (1/N) \cdot \Sigma^{N}_{i=1} \; \gamma_{PC\text{-}m}(i);$$

the values of *RMSI* sensitivity index being stored in said memory area and visualized on the visualization device.

**3.** The method according to claim 1 or 2, **characterised in that** it comprises, within step A:

A.5 calculating a project critical path PC-P(i);
A.6 calculating coefficients $\alpha_{PC\text{-}P}(i)$ so defined: $\alpha_{PC\text{-}P}(i) = 1$ if the task finds itself on the project critical path PC-P(i) and 0 otherwise;

and, within step B:

B.1 extracting the probability distribution and the cumulated probability distribution, that is called "S-curve", of the shifting $ST^{P}$ of the end time instant of the project with respect to the reference baseline starting from the N values of time shiftings of the tasks, being the distributions **characterised by** a $\sigma(ST^{P})$ standard deviation;
B.4 for each task, calculating the values of the index TSSI of sensitivity of planning to the shifting of task T, defined as:

$$TSSI = CI^{P} \cdot (\sigma(ST)/\sigma(ST^{P}))$$

wherein $CI^{P}$, comprised between 0 and 1, is the coefficient of belonging of task to the project critical path, defined as:

$$CI^{P} = (1/N) \cdot \Sigma^{N}_{i=1} \; \alpha_{PC\text{-}P}(i);$$

the values of *TSSI* sensitivity index being stored in said memory area and visualized on the visualization device.

**4.** The method according to any claim 1 to 3, **characterised in that** it comprises the calculation, for each task and each risk:

- a probability distribution of the values of duration variation induced on the task as a consequence of effects of the risk, with a standard deviation $\sigma(ST)$;

and, within step B:

B.3 calculating the values of a sensitivity index *RTSI* of sensitivity to delay a task of said subset of tasks as caused by a risk, defined as follows:

$$RTSI = CI \cdot (\sigma(\delta)/\sigma(ST))$$

wherein CI, comprised between 0 and 1, is the occurrence coefficient of the risk defined as:

$$CI = (1/N) \cdot \Sigma^{N}_{i=1} \; \beta(i);$$

the values of *RTSI* sensitivity index being stored in said memory area and visualized on the visualization device.

5. Computer program **characterised in that** it comprises code means suitable to carry out, when operating on a computer, the steps of the method according to any claim 1 to 4.

6. Memory support readable by a computer, having a program memorized on it, **characterised in that** the program is the computer program according to claim 5.

7. System for concurrently and consistently updating, processing and managing databases of projects data, the system comprising at least a computer connected to a first mass storage device whereon a first database containing risks data is stored, the risks data comprising at least one of a probability of risk occurring and a relevant temporal delay, the computer being further connected to a second mass storage device whereon a second database containing planning data is stored, as the planning data comprising at least one of a task duration, a task sequence and a task predecessor, the computer comprising a memory whereon code means are stored which, when run on the computer, manages the risks and planning data according to the method of any claim 1 to 4, to provide as output a set of values corresponding to the values of the index $RSSI$ that provide estimation of the contribution of each specific risk to each specific task or milestone, and store this set in a memory that can be accessed independently from said first and second databases.

8. System according to claim 7, further comprising visualization means, whereon said set of values are shown in the form of matrix.

9. System according to claim 8, **characterised in that** the computer further comprises means for eliminating from visualization values of said matrix that are below a threshold value set under user selection, and, if any column/row comprise only null values, a sub-matrix of smaller dimension is visualized, focused on the values that are higher than said threshold, and which corresponds to significant risks to be considered.

10. System according to any claim 7 to 9, wherein said at least a computer is a server computer, which receives updated data from one or more client computers to update one or more data in said first and second databases, and is able to access said memory to visualize said matrix.

11. System according to claim 10, wherein said one or more client computers are mobile computer devices, such as mobile smart phones or handhelds.

12. System according to claim 11, wherein said one or more client computers are able to download said coefficients matrix and visualize it.

13. System according to any claim 10 to 12, wherein said one or more client computers send update data to said a server computer via SMS communications or the like.

14. System according to any claim 10 to 12, wherein said first and second mass storage devices are the same device, the first and second databases being stored on different memory areas.

15. System according to claim 14, wherein said first and second databases are sub-sets of a main project database.

Fig. 1

Fig 2

Risk

| | 1 ... | | ... | j | ... | J |
|---|---|---|---|---|---|---|
| 1 | | | | | | |
| ... | | | | | | |
| m | | | | | | |
| ... | | | | | | |
| ... | | | | | | |
| M | | | | | | |

Fig. 3

EP 2 383 689 A1

GANTT

Risk register

planning tool

Microsoft Excel®

Win Pj

MsXL

@Risk

Visual Basic

ENGINE

Output

Fig. 4

EP 2 383 689 A1

| ID | 0 | Activity name | SEMESTER 1, 2008 | SEMESTER 2, 2008 | SEMESTER 1, 2009 | SEMESTER 2, 2009 | SEMESTER 1, 2010 | SEMESTER 2, 2010 |
|---|---|---|---|---|---|---|---|---|
| | | | G F M A M G | L A S O N D | G F M A N G | L A S O N D | G F M A M G | L A S O N D |
| 1 | | ⊟ project SW CMS light | | | | | | 0% |
| 2 | | contract start-up | ◆ 05.06 | | | | | |
| 3 | | ⊟ SW development | | 0% | | | | |
| 4 | | SW specification requirements | | 0% | | | | |
| 5 | | Preliminary design review | | ◆ 29.09 | | | | |
| 6 | | Virtual machine development | | | 0% | | | |
| 7 | | HMI development | | | 0% | | | |
| 8 | | Development of interfaces to the system | | | 0% | | | |
| 9 | | Critical design review | | | ◆ 23.02 | | | |
| 10 | | ⊟ Integration | | | 0% | | | |
| 11 | | HW system integration | | | 0% | | | |
| 12 | | SW modules integration | | | 0% | | | |
| 13 | | Factory Acceptance Test | | | ◆ 05.06 | | | |
| 14 | | ⊟ Delivery and installation | | | 0% | | | |
| 15 | | Delivery to client's site | | | 0% | | | |
| 16 | | installation | | | 0% | | | |
| 17 | | site acceptance test | | | ◆ 23.07 | | | |
| 18 | | Warranty | | | | 0% | | |
| 19 | | Final system acceptance | | | | | | ◆ 15.07 |
| 20 | | End of contract | | | | | | ◆ 29.07 |

Fig. 5

| risk ID | Probab. of Occurrence | Delay Min | Delay ML | Delay MAX | Prob. MIN | Prob. ML | Prob. MAX | Activity ID | Description |
|---|---|---|---|---|---|---|---|---|---|
| | | | | | | | | 1 | project SW CMS light |
| | | | | | | | | 2 | contract start-up |
| | | | | | | | | 3 | SW development |
| 1 | 40% | 0 | 40 | 60 | 0% | 80% | 20% | 4 | SW specification requirements |
| 2 | 50% | 0 | 30 | 40 | 0% | 60% | 40% | 5 | Preliminary design review |
| | | | | | | | | 6 | Virtual machine development |
| 3 | 80% | 0 | 15 | 40 | 0% | 70% | 30% | 7 | HMI development |
| 4 | 15% | 0 | 26 | 45 | 0% | 60% | 40% | 8 | Development of interfaces to the system |
| | | | | | | | | 9 | Critical design review |
| | | | | | | | | 10 | Integration |
| 5 | 20% | 0 | 20 | 35 | 0% | 80% | 20% | 11 | HW system integration |
| | | | | | | | | 12 | SW modules integration |
| 6 | 10% | 0 | 30 | 45 | 0% | 50% | 50% | 13 | Factory Acceptance Test |
| | | | | | | | | 14 | Delivery and installation |
| 7 | 70% | 0 | 20 | 40 | 0% | 60% | 40% | 15 | Delivery to client's site |
| 8 | 30% | 0 | 15 | 30 | 0% | 80% | 20% | 16 | installation |
| 9 | 10% | 0 | 10 | 20 | 0% | 60% | 40% | 17 | site acceptance test |
| | | | | | | | | 18 | Warranty |
| | | | | | | | | 19 | Final system acceptance |
| | | | | | | | | 20 | End of contract |

Fig. 6

Fig. 7

| Activity ID | Milestone/activity description | Output on milestone/activity vs project completion | | | Output on risk vs milestone/activity | | Output on Risk vs project completion date | | Risk ID |
|---|---|---|---|---|---|---|---|---|---|
| | | standard deviation | TSSI$_t$ | TSSI$_t$ Rank | standard deviation | RTSI$_j$ | RSSI | RSSI Level | |
| 1 | project SW CMS light | | - | - | - | - | - | - | |
| 2 | contract start-up | | - | - | - | - | - | - | |
| 3 | SW development | | - | - | - | - | - | - | |
| 4 | SW specification requirements | 14,51 | 0,44 | 9 | 14,51 | 0,40 | 0,18 | 3 | 1 |
| 5 | Preliminary design review | 20,46 | 0,62 | 7 | 14,23 | 0,35 | 0,22 | 2 | 2 |
| 6 | Virtual machine development | 20,46 | 0,40 | 10 | - | - | - | - | |
| 7 | HMI development | 24,00 | 0,28 | 11 | 12,04 | 0,40 | 0,14 | 4 | 3 |
| 8 | Development of interfaces to the system | 22,54 | 0,44 | 8 | 9,53 | 0,06 | 0,04 | 7 | 4 |
| 9 | Critical design review | 22,64 | 0,69 | 6 | - | - | - | - | |
| 10 | Integration | | - | - | - | - | - | - | |
| 11 | HW system integration | 24,70 | 0,75 | 5 | 8,65 | 0,07 | 0,05 | 6 | 5 |
| 12 | SW modules integration | 24,70 | 0,75 | 5 | - | - | - | - | |
| 13 | Factory Acceptance Test | 26,17 | 0,80 | 4 | 9,50 | 0,04 | 0,03 | 8 | 6 |
| 14 | Delivery and installation | | - | - | - | - | - | - | |
| 15 | Delivery to client's site | 29,60 | 0,90 | 3 | 13,29 | 0,31 | 0,28 | 1 | 7 |
| 16 | installation | 31,89 | 0,97 | 2 | 10,85 | 0,10 | 0,10 | 5 | 8 |
| 17 | site acceptance test | 31,89 | 0,97 | 2 | - | - | - | - | |
| 18 | Warranty | 32,83 | 1,00 | 1 | 6,98 | 0,02 | 0,02 | 9 | 9 |
| 19 | Final system acceptance | 31,89 | 0,97 | 2 | - | - | - | - | |
| 20 | End of contract | 32,83 | 1,00 | 1 | - | - | - | - | |

Fig. 8

EP 2 383 689 A1

| $Cl_{jm}$ * Number of Iterations | | risk id | | | | | | | | |
|---|---|---|---|---|---|---|---|---|---|---|
| Acticity ID | | 1 | 2 | 3 | 4 | 5 | 6 | 7 | 8 | 9 |
| 1 | project SW CMS light | | | | | | | | | |
| 2 | contract start-up | | | | | | | | | |
| 3 | SW development | | | | | | | | | |
| 4 | SW specification requirements | 400 | | | | | | | | |
| 5 | Preliminary design review | 400 | 500 | | | | | | | |
| 6 | Virtual machine development | 400 | 500 | | | | | | | |
| 7 | HMI development | 400 | 500 | 800 | | | | | | |
| 8 | Development of interfaces to the system | 247 | 331 | | 150 | | | | | |
| 9 | Critical design review | 400 | 500 | 385 | 147 | | | | | |
| 11 | HW system integration | 400 | 500 | 385 | 147 | 200 | | | | |
| 12 | SW modules integration | 400 | 500 | 385 | 147 | 200 | | | | |
| 13 | Factory Acceptance Test | 400 | 500 | 385 | 147 | 200 | 100 | | | |
| 15 | Delivery to client's site | 400 | 500 | 385 | 147 | 200 | 100 | 700 | | |
| 16 | installation | 400 | 500 | 385 | 147 | 200 | 100 | 700 | 300 | |
| 17 | site acceptance test | 400 | 500 | 385 | 147 | 200 | 100 | 700 | 300 | |
| 18 | Warranty | 400 | 500 | 385 | 147 | 200 | 100 | 700 | 300 | 100 |
| 19 | Final system acceptance | 400 | 500 | 385 | 147 | 200 | 100 | 700 | 300 | 100 |
| 20 | End of contract | 400 | 500 | 385 | 147 | 200 | 100 | 700 | 300 | 100 |

Milestone/activity

Fig. 9

EP 2 383 689 A1

| Milestone/activity | RMSI$_{jm}$ | | ID Risk | | | | | | | | |
| | Activity ID | Activity description | 1 | 2 | 3 | 4 | 5 | 6 | 7 | 8 | 9 |
|---|---|---|---|---|---|---|---|---|---|---|---|
| | 1 | project SW CMS light | - | - | - | - | - | - | - | - | - |
| | 2 | contract start-up | - | - | - | - | - | - | - | - | - |
| | 3 | SW development | - | - | - | - | - | - | - | - | - |
| | 4 | SW specification requirements | 0,40 | - | - | - | - | - | - | - | - |
| | 5 | Preliminary design review | 0,28 | 0,35 | - | - | - | - | - | - | - |
| | 6 | Virtual machine development | 0,28 | 0,35 | - | - | - | - | - | - | - |
| | 7 | HMI development | 0,24 | 0,30 | 0,40 | - | - | - | - | - | - |
| | 8 | Development of interfaces to the system | 0,16 | 0,21 | - | 0,06 | - | - | - | - | - |
| | 9 | Critical design review | 0,26 | 0,31 | 0,20 | 0,06 | - | - | - | - | - |
| | 11 | HW system integration | 0,23 | 0,29 | 0,19 | 0,06 | 0,07 | - | - | - | - |
| | 12 | SW modules integration | 0,23 | 0,29 | 0,19 | 0,06 | 0,07 | - | - | - | - |
| | 13 | Factory Acceptance Test | 0,22 | 0,27 | 0,18 | 0,05 | 0,07 | 0,04 | - | - | - |
| | 15 | Delivery to client's site | 0,20 | 0,24 | 0,16 | 0,05 | 0,06 | 0,03 | 0,31 | - | - |
| | 16 | installation | 0,18 | 0,22 | 0,15 | 0,04 | 0,05 | 0,03 | 0,29 | 0,10 | - |
| | 17 | site acceptance test | 0,18 | 0,22 | 0,15 | 0,04 | 0,05 | 0,03 | 0,29 | 0,10 | - |
| | 18 | Warranty | 0,18 | 0,22 | 0,14 | 0,04 | 0,05 | 0,03 | 0,28 | 0,10 | 0,02 |
| | 19 | Final system acceptance | 0,18 | 0,22 | 0,15 | 0,04 | 0,05 | 0,03 | 0,29 | 0,10 | 0,02 |
| | 20 | End of contract | 0,18 | 0,22 | 0,14 | 0,04 | 0,05 | 0,03 | 0,28 | 0,10 | 0,02 |

Fig. 10

EP 2 383 689 A1

Fig. 11

Fig. 12

Fig. 13

Europäisches
Patentamt

European
Patent Office

Office européen
des brevets

# EUROPEAN SEARCH REPORT

Application Number

EP 11 42 5119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/138141 A2 (FISHMAN ILYA M [US]) 28 December 2006 (2006-12-28) * abstract * * page 1, line 8 - page 4, line 20 * * page 5, line 26 - page 12, line 5 * * claims 1-12 * ----- | 1-9 | INV. G06Q10/00 |
| X | US 2007/124186 A1 (VIRINE LEV [CA]) 31 May 2007 (2007-05-31) * abstract * * paragraph [0003] - paragraph [0015] * * paragraph [0025] - paragraph [0055] * * claims 1-16 * ----- | 1-9 | |
| A | US 2004/138897 A1 (EAPEN GILL R [US]) 15 July 2004 (2004-07-15) * the whole document * ----- | 1-9 | |

| | | | TECHNICAL FIELDS SEARCHED (IPC) |
|---|---|---|---|
| | | | G06Q |

The present search report has been drawn up for all claims

| Place of search | Date of completion of the search | Examiner |
|---|---|---|
| The Hague | 30 June 2011 | Peelen, Bastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 42 5119

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2011

| Patent document cited in search report | | Publication date | Patent family member(s) | Publication date |
|---|---|---|---|---|
| WO 2006138141 | A2 | 28-12-2006 | NONE | |
| US 2007124186 | A1 | 31-05-2007 | NONE | |
| US 2004138897 | A1 | 15-07-2004 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006138141 A
- US 20070124186 A1
- US 2007124186 A1
- US 20040138897 A
- US 2004138897 A1